# EUROPÄISCHE PATENTANMELDUNG

(11) **EP 4 832 306 A1**
(43) Veröffentlichungstag der Anmeldung: **28.10.2026**
(21) Anmeldenummer: 26172938.8
(22) Anmeldetag: 17.04.2026
(51) Int. Cl.: H02J 50/10, H02J 50/00, H02J 50/90

(54) **KFZ-LADEGERÄT ZUM DRAHTLOSEN LADEN EINES MOBILTELEFONS UND VERFAHREN ZUR STEUERUNG DIESES KFZ LADEGERÄTS**

(30) Priorität: 22.04.2025 CZ 20250178
(71) Anmelder: Skoda Auto a.s., 29301 Mladá Boleslav (CZ)
(72) Erfinder: Mlacki, Patrik, 29446 Semcice (CZ); Jirásek, Jan, 51263 Ktová (CZ)

(57) **Zusammenfassung**

Ein Fahrzeugladegerät (1) zum drahtlosen Laden eines Telefons (7) umfasst einen Halter (3) einer Induktionsspule (11), eine Induktionsspule (11) zum Laden des Telefons, eine Steuereinheit (8) sowie eine Abdeckung (2) der Induktionsspule (11). Die Induktionsspule (11) ist an der Oberseite des Halters (3) der Induktionsspule (11) befestigt, und an der Oberseite der Induktionsspule (11) ist die Abdeckung (2) der Induktionsspule (11) befestigt. Bei Draufsicht auf die Induktionsspule (11) ist die Induktionsspule (11) von allen seitlichen Seiten durch den Halter (3) der Induktionsspule (11) umgeben. Die Induktionsspule (11) ist kommunikationstechnisch mit der Steuereinheit (8) verbunden. Das Fahrzeugladegerät (1) umfasst ferner eine Lichtquelle (5). Diese Lichtquelle (5) ist kommunikationstechnisch mit der Steuereinheit (8) verbunden. Mindestens ein Teil des Halters (3) der Induktionsspule (11) besteht aus einem lichtdurchlässigen Material zur Führung des Lichts der Lichtquelle (5). Die Lichtquelle (5) ist in Richtung des lichtdurchlässigen Materials des Halters (3) ausgerichtet.

## Beschreibung

### Technisches Gebiet

Die Erfindung betrifft ein beleuchtetes drahtloses Ladegerät für ein Mobiltelefon, insbesondere ein drahtloses Telefonladegerät, das in einem Kraftfahrzeug integriert ist.

### Stand der Technik

Im Stand der Technik sind Kfz-Ladegeräte für das drahtlose Laden bekannt, die Lichtquellen umfassen, welche den Ladezustand des Telefons signalisieren. Beispielsweise offenbart das Dokument US20140203770 A1 ein drahtloses Ladegerät in einem Kraftfahrzeug. Dieses Ladegerät ist an die Ambientebeleuchtung des Fahrzeuginnenraums angebunden, wobei sich während des Ladevorgangs in Abhängigkeit vom Ladezustand die Art der Abstrahlung der Ambient-Lichtquellen ändert. Das drahtlose Ladegerät kann an Lichtquellen im Armaturenbrett, an Lichtquellen im Kombiinstrument, an Lichtquellen im Fahrzeugdisplay usw. angebunden sein. Während des Ladevorgangs können die Lichtquellen je nach Ladezustand des Telefonakkus grün, gelb oder rot leuchten, und bei einem Fehler während des Ladevorgangs können die Ambient-Lichtquellen je nach Art des Ladefehlers rot, gelb oder weiß blinken; gegebenenfalls können bei einer Beschädigung des drahtlosen Ladegeräts die Lichtquellen einen spezifischen Farbton emittieren.

Ein Nachteil des Standes der Technik kann darin bestehen, dass das drahtlose Ladegerät an sämtliche Lichtquellen der Ambientebeleuchtung im Fahrzeuginnenraum angebunden ist, sodass sich im Falle einer Störung während des Ladevorgangs alle Lichtquellen in Blinkbetrieb versetzen können (oder ein anderes visuelles Warnsignal bezüglich eines Fehlers beim Laden des Telefons ausgeben), was den Fahrer während des Führens des Kraftfahrzeugs ablenken kann. Es wäre daher wünschenswert, eine Lösung bereitzustellen, die den Fahrer beim Führen des Kraftfahrzeugs beispielsweise im Falle einer Störung während des Ladevorgangs nicht stört, wobei das lichtbasierte Signal, das einen Ladefehler des Telefons meldet, gleichzeitig hinreichend deutlich und sichtbar ist.

### Wesen der Erfindung

Die Nachteile der aus dem Stand der Technik bekannten Lösungen werden in gewissem Umfang durch ein Kfz-Ladegerät zum drahtlosen Laden eines Telefons beseitigt. Das Kfz-Ladegerät zum drahtlosen Laden eines Telefons umfasst einen Halter einer Induktionsspule, eine Induktionsspule zum Laden des Telefons, eine Steuereinheit sowie eine Abdeckung der Induktionsspule. Die Induktionsspule ist an einer Oberseite des Halters der Induktionsspule befestigt. An einer Oberseite der Induktionsspule ist die Abdeckung der Induktionsspule befestigt. In Draufsicht auf die Induktionsspule ist die Induktionsspule an allen seitlichen Seiten vom Halter der Induktionsspule umgeben. Die Induktionsspule ist kommunikationstechnisch mit der Steuereinheit verbunden. Das Kfz-Ladegerät umfasst ferner eine Lichtquelle. Die Lichtquelle ist kommunikationstechnisch mit der Steuereinheit verbunden. Mindestens ein Teil des Halters der Induktionsspule besteht aus einem lichtdurchlässigen Material zur Führung von Licht der Lichtquelle. Die Lichtquelle ist in das lichtdurchlässige Material des Halters ausgerichtet.

Das Kfz-Ladegerät kann in das Armaturenbrett oder in die Mittelkonsole (d. h. die Konsole zwischen Beifahrersitz und Fahrersitz) des Fahrgastraums integriert sein. Vorzugsweise ist das Kfz-Ladegerät an der Mittelkonsole im vorderen Bereich dieser Mittelkonsole befestigt. Das Kfz-Ladegerät kann an der Mittelkonsole unlösbar befestigt sein. Das Kfz-Ladegerät zum drahtlosen Laden des Telefons kann an die Fahrzeugbatterie angeschlossen sein. Vorzugsweise ragt zumindest ein Teil des Kfz-Ladegeräts über die Oberfläche der Mittelkonsole hinaus.

Das Kfz-Ladegerät kann die Form eines Zylinders aufweisen, dessen zumindest oberer Teil über eine umgebende Oberfläche, z. B. die Oberfläche der Mittelkonsole, hinausragt. Die Mittelachse des Zylinders des Kfz-Ladegeräts kann senkrecht zu einer horizontalen Ebene ausgerichtet sein; die Mittelachse des Zylinders des Kfz-Ladegeräts kann jedoch um einige Grad von der senkrechten Ausrichtung zur horizontalen Ebene abweichen, beispielsweise um 5° oder 8° usw. Die Mittelachse des Zylinders des Kfz-Ladegeräts kann die Rotationsachse des Zylinders des Kfz-Ladegeräts sein.

Die Induktionsspule zum drahtlosen Laden des Telefons umfasst vorzugsweise einen Ferritkern, um den beispielsweise ein Kupferdraht gewickelt ist usw. Die Induktionsspule weist vorzugsweise die Form eines Rings auf. Die Induktionsspule ist vorzugsweise gegenüber den umgebenden Flächen der Mittelkonsole höher angeordnet.

Zumindest ein Teil des Halters der Induktionsspule ist lichtdurchlässig. Zumindest ein Teil des Halters der Induktionsspule kann transparent sein. Zumindest ein Teil des Halters der Induktionsspule kann vollständig farblos sein, kann eingefärbt sein oder kann beispielsweise milchig getrübt sein usw. Der lichtdurchlässige Teil des Halters der Induktionsspule kann eine prismatische Struktur usw. aufweisen.

Die Induktionsspule wird vom Halter der Induktionsspule getragen. Der Halter der Induktionsspule kann ein- oder mehrteilig ausgeführt sein. Die einzelnen Teile des Halters können lösbar oder unlösbar miteinander befestigt sein. Die einzelnen Teile des Halters der Induktionsspule können beispielsweise verklebt oder mittels einer Schraube verschraubt sein usw. Wenn der Halter zumindest zwei Teile umfasst, ist vorzugsweise zumindest ein vollständiger Teil des Halters der Induktionsspule lichtdurchlässig. Falls der Halter nur ein Teil umfasst, kann nur ein Teil des Halters der Induktionsspule lichtdurchlässig sein, beispielsweise ein Teil des Halters der Induktionsspule, der das Licht von der Lichtquelle aus dem Kfz-Ladegerät herausführt, usw.; vorzugsweise ist jedoch der gesamte Halter der Induktionsspule lichtdurchlässig.

Der Halter der Induktionsspule kann zwei Teile umfassen, beispielsweise einen lichtleitenden Teil und einen Abdeckteil. Der lichtleitende Teil kann das Licht von der Lichtquelle aus dem Kfz-Ladegerät herausführen und kann den Abdeckteil abstützen. Der gesamte lichtleitende Teil ist vorzugsweise lichtdurchlässig. An dem Abdeckteil kann die Induktionsspule befestigt sein. Der Abdeckteil kann mit der Unterseite der Induktionsspule in Kontakt stehen. Der Abdeckteil kann aus einem lichtundurchlässigen Material bestehen. Die Induktionsspule kann lösbar oder unlösbar am Abdeckteil befestigt sein; der Abdeckteil kann beispielsweise eine Ausnehmung zum Einlegen der Induktionsspule aufweisen, wobei die Spule in dieser Ausnehmung lediglich aufgelegt ist, usw.

Ein Teil der Oberfläche des lichtdurchlässigen Teils des Halters der Induktionsspule kann reflektierende Elemente zum Reflektieren des Lichts der Lichtquelle aufweisen. Mittels dieser reflektierenden Elemente kann der Verlust bzw. die Absorption des Lichts beim Durchtritt des Lichts durch den Halter der Induktionsspule begrenzt werden.

Das Kfz-Ladegerät kann eine Leiterplatte (d. h. eine Leiterplattenplatine) umfassen. Die Lichtquelle kann an der Leiterplatte befestigt sein. An der Leiterplatte kann auch die Steuereinheit befestigt sein. Die Kommunikation zwischen der Lichtquelle und der Steuereinheit kann mittels Leiterbahnverbindungen der Leiterplatte zwischen der Steuereinheit und der Lichtquelle sichergestellt sein. Die Leiterplatte, an der die Lichtquelle befestigt ist, kann lösbar an der Unterseite des Halters der Induktionsspule befestigt sein. Die Leiterplatte kann beispielsweise an die Unterseite des Halters der Induktionsspule angeschraubt sein usw. Die Lichtquelle kann somit über die Leiterplatte an der Unterseite des Halters der Induktionsspule befestigt sein.

Die Leiterplatte muss jedoch nicht in Kontakt mit der Unterseite des lichtdurchlässigen Teils des Halters der Induktionsspule stehen. Die Lichtquelle, die an der Leiterplatte befestigt sein kann, kann so ausgerichtet sein, dass das emittierte Licht vom Halter der Induktionsspule bzw. vom lichtdurchlässigen Teil dieses Halters aus dem Kfz-Ladegerät herausgeführt wird.

Die Lichtquelle kann jedoch an der Unterseite des Halters der Induktionsspule, konkret an dem lichtdurchlässigen Teil des Halters der Induktionsspule, befestigt sein. Die Lichtquelle kann beispielsweise an die Unterseite des Halters angeklebt sein usw.

Die Steuereinheit kann an die Lichtquelle Befehle für verschiedene Lichteffekte senden, beispielsweise für ein Pulsieren des Lichts oder für ein schnelles Blinken des Lichts usw. Jeder Lichteffekt kann ein anderes Signal für den Benutzer darstellen. Beispielsweise kann das Pulsieren dem Benutzer anzeigen, dass das Telefon vom Kfz-Ladegerät geladen wird usw. Ein schnelles Blinken kann einen Fehler beim Laden des Telefons anzeigen usw. Lichteffekte, die einen Vorgang beim Laden des Telefons signalisieren (beispielsweise Beginn des Ladevorgangs, Fehler beim Laden usw.), können nur für eine bestimmte Zeit leuchten, beispielsweise 5 Sekunden, 10 Sekunden oder 1 Minute usw. Nach Ablauf dieser Zeit kann das Lichtsignal in ein anderes geändert werden, beispielsweise in ein Dauerleuchten usw.

Die Steuereinheit kann über wenigstens einen elektrischen Draht oder ein elektrisches Kabel mit der Induktionsspule verbunden sein. Die Steuereinheit kann von der Induktionsspule ein Signal darüber erhalten, ob sich ein Telefon in der Nähe der Induktionsspule befindet und ob dieses Telefon von der Induktionsspule drahtlos geladen wird. Auf Basis dieser Eingangsinformationen kann die Steuereinheit Signale an die Lichtquelle senden.

Das Licht der Lichtquelle wird durch den lichtdurchlässigen Teil des Halters der Induktionsspule aus dem Kfz-Ladegerät herausgeführt. Vorzugsweise wird das Licht bei Draufsicht auf das Kfz-Ladegerät gleichmäßig um die Induktionsspule bzw. um die Abdeckung der Induktionsspule herum emittiert.

Die Lichtquelle kann bei Draufsicht auf das Kfz-Ladegerät in der Mitte des durch die Induktionsspule begrenzten Raums angeordnet sein, um eine gleichmäßige Lichtemission durch den lichtdurchlässigen Teil des Halters der Induktionsspule sicherzustellen. Bei Seitenansicht eines Schnittes durch das Kfz-Ladegerät ist die Induktionsspule oberhalb der Lichtquelle angeordnet.

Die Lichtquelle ist in das lichtdurchlässige Material des Halters ausgerichtet. Das heißt, zumindest ein Teil des von der Lichtquelle emittierten Lichts trifft auf eine innere Oberfläche des Halters, und dieses Licht wird vom Halter aus dem Kfz-Ladegerät herausgeführt.

Die Lichtquelle kann einfarbig oder auch mehrfarbig sein. Die Lichtquelle kann mehrere lichtemittierende Elemente umfassen, beispielsweise mehrere LEDs usw. Alle Elemente der Lichtquelle können gleich sein, d. h. sie können beispielsweise Licht derselben Farbe emittieren; jedes Element der Lichtquelle kann jedoch auch einzigartig sein, wobei jedes Element der Lichtquelle eine andere Farbe emittieren kann usw. Vorzugsweise sind alle Elemente der Lichtquelle so ausgerichtet, dass das von diesen Elementen der Lichtquelle emittierte Licht in den lichtdurchlässigen Teil des Halters der Induktionsspule eintritt.

An der Oberseite der Induktionsspule ist eine Abdeckung der Induktionsspule befestigt. Die Abdeckung der Induktionsspule kann ein mechanisches Beschädigen der Induktionsspule durch äußere Einflüsse, wie beispielsweise Verkratzen oder Zerdrücken des Ferritkerns usw., verhindern. Die Abdeckung der Induktionsspule kann aus Kunststoff bestehen. Die Abdeckung der Induktionsspule besteht vorzugsweise aus einem lichtundurchlässigen Material. Bei Draufsicht auf das Kfz-Ladegerät kann die Abdeckung der Induktionsspule rund sein. Vorzugsweise ist bei Draufsicht auf das Kfz-Ladegerät der Durchmesser der Abdeckung der Induktionsspule größer als der Außendurchmesser der Induktionsspule. Bei Draufsicht auf das Kfz-Ladegerät kann die Abdeckung der Induktionsspule an allen Seiten vom Halter der Induktionsspule umgeben sein. Aus dem Halter der Induktionsspule, der bei Draufsicht auf das Kfz-Ladegerät die Abdeckung der Induktionsspule seitlich umgibt, kann Licht der Lichtquelle emittiert werden.

Durch den Halter der Induktionsspule kann das Licht der Lichtquelle bei Draufsicht um den äußeren Rand der Abdeckung der Induktionsspule herum geführt werden. Bei Draufsicht auf das Kfz-Ladegerät kann ein schmaler Ring des lichtdurchlässigen Teils des Halters der Induktionsspule sichtbar sein, der die kreisförmige Abdeckung der Induktionsspule umgibt.

Der Halter der Induktionsspule kann das Licht auch seitlich um die Induktionsspule herum führen. Bei Seitenansicht eines Schnittes durch das Kfz-Ladegerät, bei dem die Induktionsspule oberhalb des umgebenden Oberflächenniveaus der Mittelkonsole angeordnet ist, kann das Licht der Lichtquelle durch den Halter der Induktionsspule bzw. durch den lichtdurchlässigen Teil des Halters auf die Seitenwände geführt werden, die die zylindrische Form des Kfz-Ladegeräts begrenzen. Vorzugsweise wird das Licht der Lichtquelle durch den Halter der Induktionsspule bzw. durch den lichtdurchlässigen Teil des Halters nur an einem oberen Teil der Seitenwände des Zylinders des Kfz-Ladegeräts aus dem Kfz-Ladegerät ausgekoppelt, beispielsweise nur an dem oberen Viertel der Seitenwände oder an dem oberen Fünftel der Seitenwände usw.

Das Licht wird über den lichtdurchlässigen Teil des Halters der Induktionsspule vorzugsweise gleichmäßig in die Umgebung des Kfz-Ladegeräts gestreut.

Beim Auflegen des Telefons auf das Kfz-Ladegerät kann das Telefon durch das Licht der Lichtquelle hinterleuchtet werden; das Licht der Lichtquelle kann an der Unterseite des Telefons und an der oberen Fläche der Mittelkonsole reflektiert werden.

Ein Vorteil des Kfz-Ladegeräts zum drahtlosen Laden des Telefons kann in einer eindeutigen Identifizierung der Position des Kfz-Ladegeräts bzw. des auf dem Kfz-Ladegerät angeordneten Telefons mittels des aus dem Kfz-Ladegerät durch den lichtdurchlässigen Halter der Induktionsspule emittierten Lichts liegen.

Ein weiterer Vorteil des Kfz-Ladegeräts zum drahtlosen Laden des Telefons kann in einer Verringerung der Ablenkung des Fahrers liegen. Das Licht der Lichtquelle wird durch den Halter der Induktionsspule geführt und gleichmäßig in die Umgebung des Kfz-Ladegeräts gestreut. Die äußere Oberfläche des Kfz-Ladegeräts weist keine punktförmige Lichtquelle auf, die den Fahrer, der das Kraftfahrzeug gerade führt, im Falle eines Blinkens oder aggressiven Leuchtens (welches den Ladezustand des Telefons anzeigt) in der Konzentration auf das Fahren stören könnte.

Ein weiterer Vorteil des Kfz-Ladegeräts zum drahtlosen Laden des Telefons kann darin bestehen, dass das Licht der Lichtquelle das auf dem Kfz-Ladegerät angeordnete Telefon hinterleuchten kann. Durch diese Hinterleuchtung kann der Fahrer die Position des Telefons leicht identifizieren, ohne dass die Aufmerksamkeit dieses Fahrers beispielsweise vom Fahren negativ beeinflusst wird.

Die Lichtquelle ist vorzugsweise eine RGB-LED. Die Lichtquelle kann Signale von der Steuereinheit zum Emittieren von Licht einer bestimmten Farbe empfangen. Von der Steuereinheit kann ein Befehl an die Lichtquelle zur jeweiligen Farbänderung gesendet werden; beispielsweise kann die Lichtquelle beim Laden des Telefons in einer anderen Farbe leuchten als in dem Fall, dass das Kfz-Ladegerät ungenutzt ist, d. h. nicht zum Laden des Telefons verwendet wird usw.

Die Lichtquelle kann insgesamt vier LEDs umfassen. Vorzugsweise sind die einzelnen Licht-LEDs gleichmäßig so angeordnet, dass das von der Lichtquelle aus dem Halter der Induktionsspule emittierte Licht in allen Richtungen gleich ist, d. h. dass auf einer Seite des Halters der Induktionsspule kein helleres und intensiveres Licht emittiert wird als auf der gegenüberliegenden Seite des Halters der Induktionsspule usw. Die einzelnen LEDs können gleichmäßig um die Mittelachse des Zylinders des Kfz-Ladegeräts angeordnet sein. Vorzugsweise sind alle vier LEDs der Lichtquelle RGB-LEDs.

Die Steuereinheit umfasst vorzugsweise einen CAN-Bus (controller area network) zur Anbindung an eine Recheneinheit der Ambientebeleuchtung. Die Recheneinheit der Ambientebeleuchtung kann eine Recheneinheit sein, die Befehle an die Lichtquellen der Ambientebeleuchtung sendet. Über den CAN-Bus kann die Steuereinheit des Kfz-Ladegeräts kommunikationstechnisch mit der Recheneinheit der Ambientebeleuchtung verbunden sein. Die Recheneinheit der Ambientebeleuchtung kann Signale an die Steuereinheit des Kfz-Ladegeräts senden, um die Lichtquelle entsprechend der Ambientebeleuchtung des Fahrgastraums einzuschalten. Das heißt beispielsweise: Wenn das Ambientelicht Lichtpulse emittiert, kann die Lichtquelle des Kfz-Ladegeräts von der Steuereinheit (auf Basis eines Befehls der Recheneinheit der Ambientebeleuchtung) so eingestellt werden, dass sie synchron zur Ambientebeleuchtung des Fahrgastraums pulsiert usw.

Von der Steuereinheit des Kfz-Ladegeräts kann eine Einstellung der Lichtquelle des Kfz-Ladegeräts zur Darstellung des Ladezustands des Telefons gegenüber einer Einstellung der Lichtquelle des Kfz-Ladegeräts auf Ambienteleuchten (auf Basis eines Befehls der Recheneinheit der Ambientebeleuchtung) bevorzugt werden. Nach dem Ende der Ausgabe des Lichteffekts, der den Ladezustand des Telefons kennzeichnet (beispielsweise nach 5, 10 oder 60 Sekunden usw.), kann von der Recheneinheit der Ambientebeleuchtung über den CAN-Bus ein Signal empfangen werden, wobei von der Steuereinheit des Kfz-Ladegeräts das Signal zur Ambientebeleuchtung an die Lichtquelle des Kfz-Ladegeräts weitergegeben werden kann.

Das Kfz-Ladegerät umfasst vorzugsweise ferner einen äußeren Mantel, der zumindest teilweise die Seiten des Halters der Induktionsspule abdeckt. Der äußere Mantel kann alternativ als äußere Abdeckung bezeichnet werden. Der äußere Mantel besteht vorzugsweise aus einem lichtundurchlässigen Material. Der äußere Mantel kann unlösbar an der Mittelkonsole befestigt sein. Die Höhe des äußeren Mantels kann geringer sein als die Höhe des Halters der Induktionsspule, der über die Mittelkonsole hinausragt. Die Höhe des äußeren Mantels kann beispielsweise die Hälfte oder drei Viertel der Höhe des Halters der Induktionsspule betragen, der über die Mittelkonsole hinausragt. Der äußere Mantel deckt vorzugsweise die Seiten des Halters der Induktionsspule im unteren Bereich ab, wobei der obere Teil der Seiten des Halters der Induktionsspule unbedeckt sein kann.

Aus dem Teil des Halters der Induktionsspule, der vom äußeren Mantel abgedeckt ist, tritt vorzugsweise kein Licht aus dem Kfz-Ladegerät aus; das Licht der Lichtquelle wird vorzugsweise aus dem Kfz-Ladegerät über den Teil des Halters der Induktionsspule ausgekoppelt, der nicht von der äußeren Abdeckung abgedeckt ist.

Das Kfz-Ladegerät umfasst vorzugsweise ferner einen magnetischen Ring zur Sicherstellung der Position des Telefons relativ zum Kfz-Ladegerät.

Der Innendurchmesser des magnetischen Rings kann gleich oder größer als der Außendurchmesser der Induktionsspule sein. Die Induktionsspule kann innerhalb des vom magnetischen Ring begrenzten Raums angeordnet sein. Zwischen der Induktionsspule und dem magnetischen Ring kann ein nichtmagnetisches Material vorgesehen sein, um Wechselwirkungen zwischen dem magnetischen Ring und der Induktionsspule zu verhindern.

Der magnetische Ring kann metallische Teile des Telefons bzw. ein ferromagnetisches Teil an der Telefonhülle magnetisch zum Kfz-Ladegerät hin anziehen. Die metallischen Teile des Telefons werden vorzugsweise so zum Kfz-Ladegerät hingezogen, dass die Induktionsspule des Telefons exakt in eine Position gegenüber der Induktionsspule des Kfz-Ladegeräts gelangt, wodurch die effizienteste Energieübertragung vom Kfz-Ladegerät zum Telefon sichergestellt ist.

Die Steuereinheit kann zum Detektieren des Ladevorgangs des Telefons über die Induktionsspule konfiguriert sein. Die Steuereinheit kann dazu konfiguriert sein, den Ladezustand des Telefons mittels der Lichtquelle anzuzeigen, wenn ein Ladevorgang des Telefons detektiert wird. Die Steuereinheit kann ferner dazu konfiguriert sein, die Lichtquelle zur Ambientebeleuchtung anzusteuern, wenn kein Ladevorgang des Telefons detektiert wird.

Wenn die Steuereinheit über die Induktionsspule die Anwesenheit eines Telefons erfasst, das von der Induktionsspule geladen wird, kann sie einen Befehl an die Lichtquelle zum Leuchten senden, wodurch eine Lichtanzeige über den Ladezustand des Telefons ausgegeben werden kann. Wenn über die Induktionsspule keine Anwesenheit eines Telefons erfasst wird, das vom Kfz-Ladegerät geladen wird, kann die Steuereinheit einen Befehl an die Lichtquelle senden, sodass diese Lichtquelle Ambientebeleuchtung emittiert. Falls die Steuereinheit über den CAN-Bus an die Recheneinheit der Ambientebeleuchtung angebunden ist, kann die von der Lichtquelle emittierte Ambientebeleuchtung mit dem Ambienteleuchten der Lichtquellen im Fahrgastraum synchronisiert werden.

Der Halter der Induktionsspule kann an dem Teil aus lichtdurchlässigem Material eine erste Lichtaustrittsfläche in Form einer Ringfläche und eine zweite Lichtaustrittsfläche in Form einer Zylinderfläche umfassen. Die erste Lichtaustrittsfläche und die zweite Lichtaustrittsfläche berühren sich vorzugsweise und begrenzen einen oberen äußeren Rand der Ladefläche.

Die erste Lichtaustrittsfläche kann horizontal ausgerichtet sein. Die zweite Lichtaustrittsfläche kann senkrecht zur ersten Lichtaustrittsfläche ausgerichtet sein.

Die Ladefläche kann die obere Fläche des Kfz-Ladegeräts sein, d. h. die Fläche, auf die das Telefon abgelegt werden kann, wenn es vom Kfz-Ladegerät kontaktlos geladen wird.

Die Nachteile der aus dem Stand der Technik bekannten Lösungen werden in gewissem Umfang durch ein Kraftfahrzeug beseitigt. Das Kraftfahrzeug umfasst eine Mittelkonsole. Bestandteil der Mittelkonsole ist wenigstens ein Kfz-Ladegerät, das oben beschrieben ist. Zumindest ein Teil jedes Kfz-Ladegeräts ragt über die obere Fläche der Mittelkonsole hinaus.

Die Mittelkonsole kann zwei Kfz-Ladegeräte oder auch drei Kfz-Ladegeräte umfassen. Die Kfz-Ladegeräte sind vorzugsweise auf der Mittelkonsole gleichmäßig so angeordnet, dass beim Verwenden eines Kfz-Ladegeräts zum drahtlosen Laden eines Telefons die übrigen Kfz-Ladegeräte nicht durch das zu ladende Telefon blockiert werden. Besonders bevorzugt umfasst die Mittelkonsole zwei Kfz-Ladegeräte, wobei die Kfz-Ladegeräte nebeneinander angeordnet sind.

Falls die Mittelkonsole zwei oder mehr Kfz-Ladegeräte umfasst, sind vorzugsweise alle Kfz-Ladegeräte hinsichtlich Form und Abmessungen identisch.

Alle Kfz-Ladegeräte der Mittelkonsole können untereinander kommunikationstechnisch verbunden sein, beispielsweise derart, dass an allen Kfz-Ladegeräten übereinstimmendes Ambientelicht leuchtet; das heißt, die Steuereinheiten aller Kfz-Ladegeräte können an einen einzigen CAN-Bus angeschlossen sein, wobei an den CAN-Bus auch die Recheneinheit der Ambientebeleuchtung angeschlossen sein kann. Von der Recheneinheit der Ambientebeleuchtung kann in den CAN-Bus ein einzelner Befehl betreffend einen konkreten Lichteffekt des Leuchtens der Lichtquellen der Kfz-Ladegeräte gesendet werden, wobei jede Steuereinheit den betreffenden Befehl empfangen und ein Signal an die jeweilige Lichtquelle für das betreffende Leuchten ausgeben kann.

Die Nachteile der aus dem Stand der Technik bekannten Lösungen werden in gewissem Umfang durch ein Verfahren zur Steuerung eines Kfz-Ladegeräts zum drahtlosen Laden eines Telefons beseitigt. In dem Verfahren zur Steuerung des Kfz-Ladegeräts zum drahtlosen Laden des Telefons wird mittels der Induktionsspule die Anwesenheit eines Telefons im Erfassungsbereich der Induktionsspule überwacht, wobei
im Falle, dass sich das Telefon im Erfassungsbereich der Induktionsspule befindet, von der Steuereinheit ein Signal an die Lichtquelle zum Emittieren von Lichtsignalen gesendet wird, die den Ladezustand des von der Induktionsspule geladenen Telefons anzeigen, und
im Falle, dass sich das Telefon außerhalb des Erfassungsbereichs der Induktionsspule befindet, von der Steuereinheit ein Signal an die Lichtquelle zum Ambienteleuchten gesendet wird.

Mittels der Induktionsspule wird die Anwesenheit eines Telefons im Erfassungsbereich dieser Induktionsspule überwacht. Der Erfassungsbereich der Induktionsspule kann eine Entfernung sein, über die noch eine Energieübertragung vom Kfz-Ladegerät zum Telefon stattfindet, wobei bei einer Vergrößerung des Abstands zwischen dem Telefon und der Induktionsspule die Energieübertragung zwischen dem Telefon und der Induktionsspule stoppen würde. Die Größe des Erfassungsbereichs der Induktionsspule kann wenige Millimeter bis wenige Zentimeter betragen.

Falls die Induktionsspule ein Telefon im Erfassungsbereich der jeweiligen Induktionsspule detektiert, kann diese Induktionsspule ein Signal an die Steuereinheit über die Anwesenheit des Telefons im Erfassungsbereich der Induktionsspule senden. Die Steuereinheit sendet auf Basis des Signals über die Anwesenheit des Telefons im Erfassungsbereich der Induktionsspule ein Signal an die Lichtquelle zum Emittieren von Lichtsignalen, die den Ladezustand des Telefons anzeigen. Der Ladezustand des Telefons kann beispielsweise den Beginn des Ladevorgangs usw. umfassen.

Mittels der Induktionsspule kann auch detektiert werden, ob das Telefon vollständig geladen ist. Eine Information darüber, dass das Telefon vollständig geladen ist, kann von der Induktionsspule an die Steuereinheit gesendet werden. Auf Basis des Signals über die vollständige Ladung des Telefons kann von der Steuereinheit ein Signal an die Lichtquelle zum Emittieren eines Lichtsignals gesendet werden, das die vollständige Ladung des Telefons anzeigt.

Mittels der Induktionsspule kann die Anwesenheit eines metallischen/magnetischen Gegenstands detektiert werden, der kein Telefon ist; ein Beispiel für einen solchen Gegenstand kann eine Zahlungskarte oder eine Uhr usw. sein. In einem solchen Fall kann von der Induktionsspule ein Signal an die Steuereinheit darüber gesendet werden, dass sich im Erfassungsbereich der Induktionsspule ein Gegenstand befindet, der kein Telefon ist. Von der Steuereinheit kann ein Befehl an die Lichtquelle zum Emittieren eines Lichtsignals gesendet werden, das die Anwesenheit eines Fremdgegenstands im Erfassungsbereich der Induktionsspule anzeigt.

Die Dauer des Leuchtens der Lichtsignale, die den Ladezustand des Telefons anzeigen, überschreitet vorzugsweise nicht einige Minuten; vorzugsweise beträgt die Dauer des Lichtsignals, das den Ladezustand des Telefons anzeigt, nur einige Sekunden, beispielsweise 5 oder 10 Sekunden usw. Nach Ablauf dieser Zeit kann von der Steuereinheit ein Signal an die Lichtquelle zum Ambienteleuchten gesendet werden.

Falls mittels der Induktionsspule detektiert wird, dass sich im Erfassungsbereich dieser Induktionsspule kein Telefon befindet, wird von der Steuereinheit ein Signal an die Lichtquelle zum Emittieren von Ambientelicht gesendet. Das Ambientelicht kann ein dauerhaftes Leuchten der Lichtquelle mit voller Intensität sein. Dieses Ambienteleuchten der Lichtquelle kann, muss jedoch nicht, dem Ambienteleuchten anderer Leuchten entsprechen, die im Fahrgastraum als Ambientebeleuchtung leuchten.

Mittels der Induktionsspule kann ein Signal über die Anwesenheit des Telefons im Erfassungsbereich dieser Induktionsspule mehrmals pro Sekunde gesendet werden, beispielsweise zehnmal pro Sekunde. Von der Steuereinheit kann lediglich eine Änderung dieses Signals ausgewertet werden, beispielsweise beim Entfernen des Telefons vom Kfz-Ladegerät oder beim Auflegen des Telefons auf das Kfz-Ladegerät usw. Die Auswertung der Signaländerung durch die Steuereinheit kann ein Senden eines Signals an die Lichtquelle zur Anzeige des Ladens des Telefons umfassen.

Ein Vorteil des Verfahrens zur Steuerung des Kfz-Ladegeräts zum drahtlosen Laden des Telefons kann in einer eindeutigen Signalisierung des Ladezustands des Telefons an den Fahrer liegen, ohne dass die Aufmerksamkeit des Fahrers, der das Kraftfahrzeug gerade führt, wesentlich unterbrochen wird.

Ein weiterer Vorteil des Verfahrens zur Steuerung des Kfz-Ladegeräts zum drahtlosen Laden des Telefons kann darin bestehen, dass, wenn die Lichtquelle keine Lichtsignale zur Anzeige des Ladezustands des Telefons durch die Induktionsspule ausgibt, die Lichtquelle Ambientelicht zur eindeutigen Anzeige des Vorhandenseins des Kfz-Ladegeräts für den Fahrer emittiert, zugleich jedoch zur Begrenzung der Ablenkung des Fahrers beiträgt, der das Kraftfahrzeug gerade führt.

Zu den Lichtsignalen, die den Ladezustand des Telefons durch die Induktionsspule anzeigen, kann ein Blinken der Lichtquelle oder das Emittieren eines pulsierenden Lichts durch die Lichtquelle gehören. Die Lichtquelle kann beispielsweise blinken, wenn ein Fehler beim Laden des Telefons durch das Kfz-Ladegerät erfasst wird usw. Die Lichtquelle kann beispielsweise pulsieren, wenn das Laden des Telefons durch das Kfz-Ladegerät begonnen wird usw.

Die Lichtquelle kann auch weitere Lichtsignale ausgeben; beispielsweise kann durch eine Farbänderung des Lichtsignals dessen Bedeutung geändert werden. Beispielsweise kann ein Pulsieren von grünem Licht den Beginn des Ladens des Telefons durch das Kfz-Ladegerät anzeigen, und ein Pulsieren von gelbem Licht kann das Entfernen des Telefons vom Kfz-Ladegerät vor vollständiger Ladung des Telefons anzeigen usw.

Falls sich das Telefon außerhalb des Erfassungsbereichs der Induktionsspule befindet, kann von der Steuereinheit ein Signal von der Recheneinheit der Ambientebeleuchtung empfangen werden. Von der Steuereinheit kann ein Signal an die Lichtquelle zur übereinstimmenden Ambientebeleuchtung mit den übrigen Lichtquellen des Fahrgastraums gesendet werden.

Das Leuchten der Lichtquelle kann so eingestellt werden, dass das emittierte Licht im Einklang mit dem Ambientelicht der umgebenden Lichtquellen steht. Das heißt beispielsweise: Wenn die Ambientebeleuchtung des Fahrgastraums Licht mit einem konstanten Intensitätsniveau emittiert, kann die Lichtquelle des Kfz-Ladegeräts von der Steuereinheit auf die Emission von Licht mit einem konstanten Intensitätsniveau eingestellt werden usw.

Von der Steuereinheit kann auch dann ein Signal zum Emittieren von Ambientelicht durch die Lichtquelle gesendet werden, wenn das Telefon vom Kfz-Ladegerät gespeist wird. Das Lichtsignal, das den Ladezustand des Telefons anzeigt, kann von der Lichtquelle nur einige Sekunden oder einige Dutzend Sekunden emittiert werden, wobei nach Beendigung der Emission des Lichtsignals, das den Ladezustand des Telefons anzeigt, von der Lichtquelle Ambienteleuchten emittiert wird.

Das Emittieren von Lichtsignalen durch die Lichtquelle hat vorzugsweise Vorrang gegenüber dem Ambienteleuchten. Das heißt: Falls die Lichtquelle Ambientelicht emittiert und beispielsweise das Laden des Telefons durch das Kfz-Ladegerät begonnen wird, schaltet die Lichtquelle vorzugsweise vom Ambienteleuchten auf das Emittieren von Lichtsignalen um, die den Ladezustand des Telefons durch die Induktionsspule anzeigen.

### Erläuterung der Zeichnungen

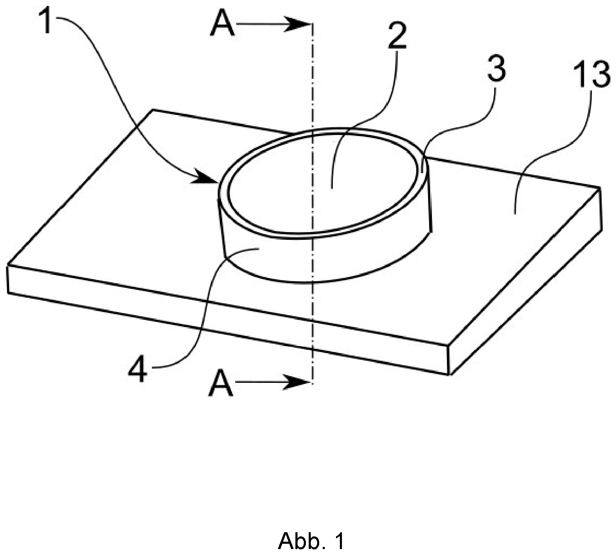

Das Wesen der Erfindung wird nachstehend anhand von Ausführungsbeispielen erläutert, die unter Verwendung der beigefügten Zeichnungen beschrieben sind, wobei in den Zeichnungen:
obr. 1 ein Ladegerät für ein Telefon schematisch dargestellt ist,
obr. 2 ein Schnitt A-A aus Abb. 1 schematisch dargestellt ist,
obr. 3 ein Schnitt A-A aus Abb. 1 mit einem auf das Ladegerät aufgelegten Telefon schematisch dargestellt ist,
obr. 4 eine Verbindung der Lichtquellen mit der Recheneinheit und der Recheneinheit der Ambientebeleuchtung schematisch dargestellt ist.

### Ausführungsbeispiele der Erfindung

Die Erfindung wird nachstehend anhand von Ausführungsbeispielen unter Bezugnahme auf die entsprechenden Zeichnungen erläutert.

### Erstes Ausführungsbeispiel

In dem ersten Ausführungsbeispiel ist ein Kfz-Ladegerät 1 zum drahtlosen Laden eines Telefons 7 beschrieben. Das Kfz-Ladegerät ist in Abb. 1 dargestellt. In diesem Ausführungsbeispiel umfasst das Kfz-Ladegerät 1 eine Lichtquelle 5, eine Steuereinheit 8, einen Halter 3 der Induktionsspule 11, eine Induktionsspule 11 zum drahtlosen Laden des Telefons 7, einen magnetischen Ring 12, einen äußeren Mantel 4 sowie eine Abdeckung 2 der Induktionsspule 11.

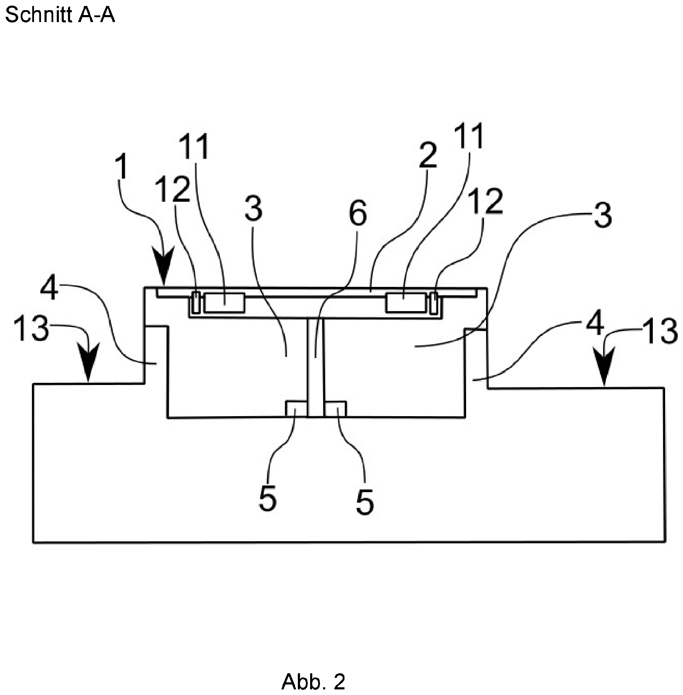

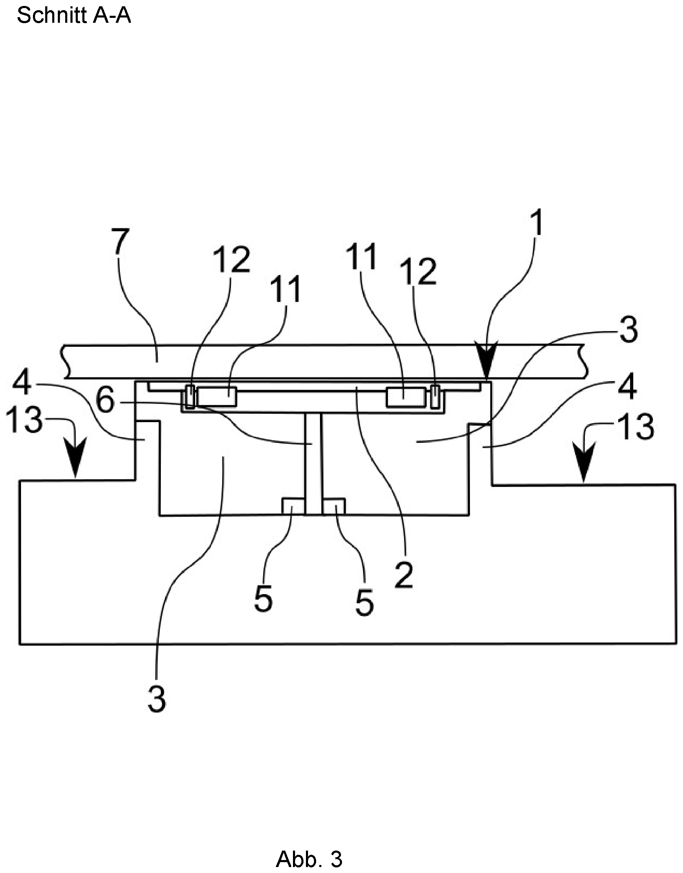

In diesem Ausführungsbeispiel weist das Kfz-Ladegerät 1 eine zylindrische Form auf, wie in Abb. 1 angedeutet. Der Zylinder des Kfz-Ladegeräts 1 ist in diesem Ausführungsbeispiel unlösbar an einer Mittelkonsole 13 des Kraftfahrzeugs befestigt. Der Zylinder des Kfz-Ladegeräts 1 ragt über die Mittelkonsole 13 des Kraftfahrzeugs hinaus. Bei Seitenansicht eines Schnittes durch das Kfz-Ladegerät 1 ragen drei Viertel der Höhe des Zylinders des Kfz-Ladegeräts 1 über die obere Fläche der Mittelkonsole 13 hinaus, wie in Abb. 2 und 3 angedeutet. Das untere Viertel der Höhe des Kfz-Ladegeräts 1 liegt unterhalb des Niveaus der oberen Fläche der Mittelkonsole 13.

In diesem Ausführungsbeispiel ist der Halter 3 der Induktionsspule 11 einteilig. Der gesamte Halter 3 der Induktionsspule 11 ist lichtdurchlässig. Der Halter 3 der Induktionsspule 11 ist in diesem Ausführungsbeispiel milchig getrübt. Der Halter 3 der Induktionsspule 11 weist an seiner Oberseite eine Ausnehmung zum Aufnehmen der Induktionsspule 11 und des magnetischen Rings 12 auf. An der Unterseite des Halters 3 der Induktionsspule 11 ist eine Lichtquelle 5 befestigt. Der Halter 3 der Induktionsspule 11 weist in seiner Mitte eine vertikale Öffnung zur Führung eines Kabels 6 auf, das die Induktionsspule 11 mit der Steuereinheit 8 verbindet.

In diesem Ausführungsbeispiel umfasst die Induktionsspule 11 einen Ferritkern, um den ein Kupferdraht gewickelt ist. Die Induktionsspule 11 ist mittels eines Kabels 6 mit der Steuereinheit 8 verbunden. Das Kabel 6, das die Steuereinheit 8 mit der Induktionsspule 11 verbindet, wird durch die vertikale Öffnung des Halters 3 der Induktionsspule 11 geführt.

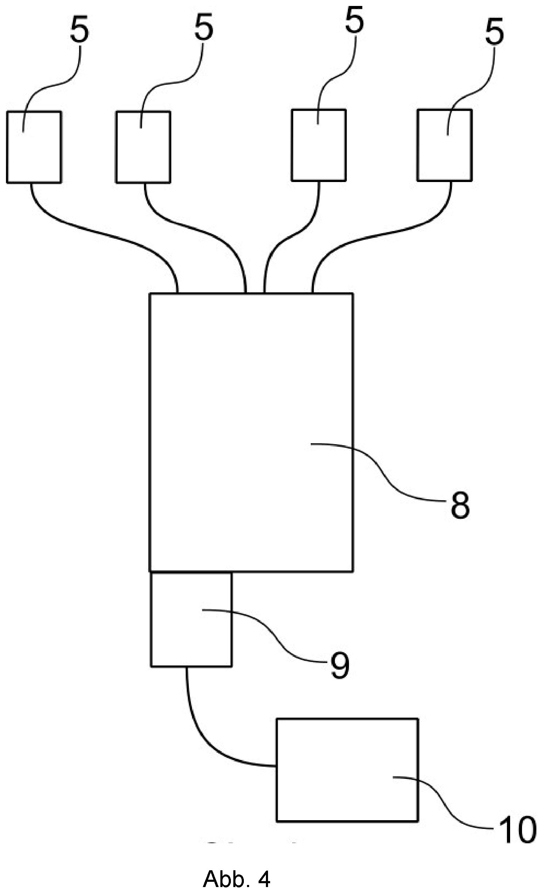

In diesem Ausführungsbeispiel umfasst die Lichtquelle 5 vier RGB-LEDs. Die einzelnen RGB-LEDs sind lösbar an der Unterseite des Halters 3 der Induktionsspule 11 befestigt. Bei Unteransicht des Halters 3 der Induktionsspule 11 sind in diesem Ausführungsbeispiel die einzelnen RGB-LEDs gleichmäßig um die Öffnung für das Kabel 6 des Halters 3 der Induktionsspule 11 angeordnet. Jede RGB-LED ist kommunikationstechnisch mit der Steuereinheit 8 verbunden. In diesem Ausführungsbeispiel ist jede RGB-LED mit der Steuereinheit 8 über eine elektrische Leitung verbunden, wie in Abb. 4 angedeutet.

Der magnetische Ring 12 besteht in diesem Ausführungsbeispiel aus einem Permanentmagneten. Durch die vom magnetischen Ring 12 erzeugte magnetische Kraft werden metallische Teile des Telefons 7 angezogen. Durch das Anziehen der metallischen Teile des Telefons 7 zum magnetischen Ring 12 wird das Telefon 7 relativ zum Kfz-Ladegerät 1 so positioniert, dass die Energieübertragung zwischen dem Kfz-Ladegerät 1 und dem Telefon 7 sichergestellt ist.

Bei Draufsicht auf die Induktionsspule 11 ist der Außendurchmesser der Induktionsspule 11 kleiner als der Innendurchmesser des magnetischen Rings 12. In diesem Ausführungsbeispiel befindet sich bei Draufsicht die Induktionsspule 11 innerhalb des magnetischen Rings 12. Zwischen dem magnetischen Ring 12 und der Induktionsspule 11 ist ein Gummimaterial vorgesehen, um unerwünschte Wechselwirkungen zwischen der Induktionsspule 11 und dem magnetischen Ring 12 zu verhindern.

Die Induktionsspule 11 und der magnetische Ring 12 sind von oben durch eine Abdeckung 2 der Induktionsspule 11 abgedeckt. Die Abdeckung 2 der Induktionsspule 11 besteht in diesem Ausführungsbeispiel aus einem lichtundurchlässigen Kunststoff. Die Abdeckung 2 der Induktionsspule 11 weist an ihrer Unterseite zwei kreisförmige Ausnehmungen zum Einschieben der Induktionsspule 11 und des magnetischen Rings 12 auf. Durch diese Ausnehmungen an der Unterseite der Abdeckung 2 der Induktionsspule 11 ist ein genaues Anliegen der Abdeckung 2 der Induktionsspule 11 an der Induktionsspule 11 und am magnetischen Ring 12 sichergestellt. Bei Draufsicht auf die Abdeckung 2 der Induktionsspule 11 weist diese Abdeckung 2 der Induktionsspule 11 die Form eines Kreises auf. Der Durchmesser des Kreises der Abdeckung 2 der Induktionsspule 11 ist in diesem Ausführungsbeispiel größer als der Außendurchmesser des magnetischen Rings 12. Bei Draufsicht auf das Kfz-Ladegerät 1 ist der Durchmesser des Halters 3 der Induktionsspule 11 größer als der Durchmesser der Abdeckung 2 der Induktionsspule 11. Bei Draufsicht auf das Kfz-Ladegerät 1 ist die Abdeckung 2 der Induktionsspule 11 an allen Seiten vom Halter 3 der Induktionsspule 11 umgeben.

In diesem Ausführungsbeispiel ist der äußere Mantel 4 des Kfz-Ladegeräts 1 unlösbar mit der Mittelkonsole 13 verbunden. Der äußere Mantel 4 besteht aus einem lichtundurchlässigen Kunststoff. Durch den äußeren Mantel 4 werden zwei Drittel der Höhe des Halters 3 der Induktionsspule 11 abgedeckt, die über die obere Fläche der Mittelkonsole 12 hinausragt. Freiliegend ist nur das obere Drittel der Höhe des Halters 3 der Induktionsspule 11, die über die obere Fläche der Mittelkonsole 13 hinausragt. Der Halter 3 der Induktionsspule 11 weist einen freiliegenden Teil an allen Seiten auf.

Die Fläche des Halters 3 der Induktionsspule 11, die bei Draufsicht auf das Kfz-Ladegerät 1 sichtbar ist, ist eine erste Lichtaustrittsfläche. Die Fläche des Halters 3 der Induktionsspule 11, die seitlich am Kfz-Ladegerät 1 sichtbar ist, ist eine zweite Lichtaustrittsfläche.

Die Steuereinheit 8 umfasst in diesem Ausführungsbeispiel einen CAN-Bus 9 zur Anbindung an eine Recheneinheit 10 der Ambientebeleuchtung, wie in Abb. 4 angedeutet. An die Recheneinheit 10 sind alle vier RGB-LEDs angeschlossen.

Die Steuereinheit 8 ist zum Detektieren des Ladens des Telefons 7 über die Induktionsspule 11 konfiguriert. Die Steuereinheit 8 ist ferner zur Anzeige des Ladezustands des Telefons 7 durch Lichtsignale der Lichtquelle 5 konfiguriert. Die Steuereinheit 8 ist ferner zur Ansteuerung der Lichtquelle 5 zum Emittieren von Ambientelicht konfiguriert, falls kein Lichtsignal, das den Ladezustand des Telefons 7 anzeigt, emittiert wird, d. h. falls kein Telefon 7 geladen wird oder das Telefon 7 geladen wird, jedoch kein Lichtsignal zur Anzeige des Ladezustands des Telefons 7 mehr emittiert wird.

Mittels der Induktionsspule 11 wird die Anwesenheit des Telefons 7 im Erfassungsbereich der Induktionsspule 11 überwacht. Falls sich das Telefon 7 im Erfassungsbereich der Induktionsspule 11 befindet, sendet die Induktionsspule 11 ein Signal an die Steuereinheit 8 über die Anwesenheit des Telefons 7 im Erfassungsbereich der Induktionsspule 11. Mittels der Induktionsspule 11 wird ferner detektiert, ob das Telefon 7 gerade an die Induktionsspule 11 angenähert wurde oder ob das Telefon 7 durch die Induktionsspule 11 vollständig geladen ist.

Auf Basis des von der Induktionsspule 11 empfangenen Signals sendet die Steuereinheit 8 ein Signal an die Lichtquelle 5 zum Emittieren eines Lichtsignals, das den Ladezustand des Telefons 7 durch die Induktionsspule 11 anzeigt.

Nachstehend ist eine Tabelle mit Zeiten angegeben, wie lange das Lichtsignal von der Lichtquelle 5 emittiert wird, und welcher Charakter das Lichtsignal für den jeweiligen Ladezustand des Telefons 7 aufweist.

**Tabelle 1: Dauer und Charakter des Leuchtens der Lichtquelle 5 bei verschiedenen Ladezuständen des Telefons 7**

| **Ladezustand des Telefons 7** | **Charakter** | **Leuchtdauer** |
|---|---|---|
| Beginn des Ladevorgangs des Telefons 7 | Pulsierendes grünes Licht | 5 s |
| Vollständige Ladung des Telefons 7 | Blinkendes grünes Licht | 10 s |
| Entnahme des Telefons 7 vor dessen vollständiger Ladung | Kontinuierlich leuchtendes gelbes Licht | 5 s |
| Fehler beim Laden des Telefons 7 | Blinkendes rotes Licht | Bis zur Behebung des Fehlers |

Falls durch die Induktionsspule 11 keine Anwesenheit des Telefons 7 im Erfassungsbereich der Induktionsspule 11 detektiert wird, empfängt die Steuereinheit 8 über den CAN-Bus 9 einen Befehl von der Recheneinheit 10 der Ambientebeleuchtung zur Einstellung der Lichtquelle 5 auf Ambienteleuchten. Die Steuereinheit 8 übernimmt den Befehl der Recheneinheit 10 der Ambientebeleuchtung und leitet ihn an die Lichtquelle 5 weiter. Die Lichtquelle 5 leuchtet somit entsprechend der umgebenden Ambientebeleuchtung des Fahrzeuginnenraums.

Von der Steuereinheit 8 wird auch dann ein Befehl von der Recheneinheit 10 der Ambientebeleuchtung empfangen, wenn kein Lichtsignal leuchtet, das den Ladezustand des Telefons 7 durch die Induktionsspule 11 anzeigt. Das heißt: Nach dem Auspulsieren des grünen Lichts, das den Beginn des Ladens des Telefons 7 signalisiert, erhält die Lichtquelle 5 von der Steuereinheit 8 einen Befehl zum Ambienteleuchten, das mit den umgebenden Ambientelichtern des Fahrzeuginnenraums übereinstimmt.

Die Emission der Lichtsignale, die den Ladezustand des Telefons anzeigen, hat eine höhere Priorität als das Ambienteleuchten der Lichtquelle 5. Beim Eintreffen eines neuen Ladezustands des Telefons 7 wird von der Lichtquelle 5 das entsprechende Lichtsignal emittiert, das den Ladezustand des Telefons 7 anzeigt, wobei das Ambienteleuchten der Lichtquelle 5 unterbrochen wird.

### Alternative Ausführungsformen

Nachstehend werden alternative Ausführungsformen des Kfz-Ladegeräts 1 zum drahtlosen Laden des Telefons 7 beschrieben. Sofern nicht anders angegeben, sind Bezugszeichen, die in der alternativen Ausführungsform nicht genannt sind, mit dem ersten Ausführungsbeispiel identisch.

In einer alternativen Ausführungsform umfasst der Halter 3 der Induktionsspule 11 zwei Teile, nämlich einen lichtleitenden Teil und einen Abdeckteil. Der Abdeckteil ist lichtundurchlässig. Der Abdeckteil steht in Kontakt mit der Unterseite der Induktionsspule 11 und des magnetischen Rings 12; konkret sind die Induktionsspule 11 und der magnetische Ring 12 auf dem Abdeckteil des Halters 3 der Induktionsspule 11 aufgelegt. Der lichtleitende Teil stützt den Abdeckteil ab. Der lichtleitende Teil besteht aus einem lichtdurchlässigen Material. An der Unterseite des lichtleitenden Teils sind sämtliche RGB-LEDs der Lichtquelle 5 befestigt.

In einer weiteren alternativen Ausführungsform umfasst die Lichtquelle 5 vier einfarbige LEDs.

In einer weiteren alternativen Ausführungsform umfasst die Lichtquelle 5 eine RGB-LED.

In einer weiteren alternativen Ausführungsform sind an der Mittelkonsole 13 zwei Kfz-Ladegeräte 1 befestigt.

In einer weiteren alternativen Ausführungsform sind die Lichtquelle 5 und die Steuereinheit 8 an einer Leiterplatte befestigt. Die Leiterplatte ist lösbar an der Unterseite des Halters 3 der Induktionsspule 11 befestigt.

In einer weiteren alternativen Ausführungsform ist die Lichtquelle 5 so ausgerichtet, dass Licht in den lichtdurchlässigen Teil des Halters 3 der Induktionsspule 11 emittiert wird. Die Lichtquelle 5 ist an der Mittelkonsole 13 unterhalb des Halters 3 der Induktionsspule 11 befestigt.

In einer weiteren alternativen Ausführungsform sind die Seiten des Halters 3 der Induktionsspule 11 vollständig durch den äußeren Mantel 4 abgedeckt. Licht aus dem Kfz-Ladegerät 1 wird nur über den unabgedeckten Teil des Halters 3 der Induktionsspule 11 emittiert, der bei Draufsicht auf das Kfz-Ladegerät 1 sichtbar ist.

In einer weiteren alternativen Ausführungsform besteht der Halter 3 der Induktionsspule 11 aus einem transparenten Material.

In einer weiteren alternativen Ausführungsform wird von der Steuereinheit 8, sofern von der Steuereinheit 8 kein Signal an die Lichtquelle 5 zum Emittieren von Lichtsignalen zur Anzeige des Ladevorgangs des Telefons 7 durch die Induktionsspule 11 gesendet wird, an die Lichtquelle 5 ein Signal zum Ambienteleuchten gesendet. Das Ambienteleuchten ist in diesem Ausführungsbeispiel ein pulsierendes weißes Licht, das unabhängig von umgebenden Lichtquellen ist.

In einer weiteren alternativen Ausführungsform ist das Kfz-Ladegerät 1 am Armaturenbrett des Kraftfahrzeugs befestigt.

### Bezugszeichenliste

1 - Kfz-Ladegerät
2 - Abdeckung der Induktionsspule
3 - Halter der Induktionsspule
4 - äußerer Mantel
5 - Lichtquelle
6 - Kabel
7 - Telefon
8 - Steuereinheit
9 - CAN-Bus
10 - Recheneinheit der Ambientebeleuchtung
11 - Induktionsspule
12 - magnetischer Ring
13 - Mittelkonsole

## Patentansprüche

1. Kfz-Ladegerät (1) zum drahtlosen Laden eines Telefons (7), das einen Halter (3) einer Induktionsspule (11), eine Induktionsspule (11) zum Laden des Telefons (7), eine Steuereinheit (8) und eine Abdeckung (2) der Induktionsspule (11) umfasst, wobei die Induktionsspule (11) an der Oberseite des Halters (3) der Induktionsspule (11) befestigt ist, an der Oberseite der Induktionsspule (11) die Abdeckung (2) der Induktionsspule (11) befestigt ist und bei Draufsicht auf die Induktionsspule (11) die Induktionsspule (11) von allen seitlichen Seiten durch den Halter (3) der Induktionsspule (11) umgeben ist, wobei die Induktionsspule (11) kommunikationstechnisch mit der Steuereinheit (8) verbunden ist, **dadurch gekennzeichnet, dass** das Kfz-Ladegerät (1) ferner eine Lichtquelle (5) umfasst, wobei die Lichtquelle (5) kommunikationstechnisch mit der Steuereinheit (8) verbunden ist, wobei zumindest ein Teil des Halters (3) der Induktionsspule (11) aus einem lichtdurchlässigen Material zur Führung des Lichts der Lichtquelle (5) besteht und die Lichtquelle (5) in Richtung des lichtdurchlässigen Materials des Halters (3) ausgerichtet ist.

2. Kfz-Ladegerät (1) zum drahtlosen Laden eines Telefons (7) nach Anspruch 1, **dadurch gekennzeichnet, dass** die Lichtquelle (5) eine RGB-LED ist.

3. Kfz-Ladegerät (1) zum drahtlosen Laden eines Telefons (7) nach Anspruch 1 oder 2, **dadurch gekennzeichnet, dass** die Lichtquelle (5) insgesamt vier LEDs umfasst.

4. Kfz-Ladegerät (1) zum drahtlosen Laden eines Telefons (7) nach einem der Ansprüche 1 bis 3, **dadurch gekennzeichnet, dass** die Steuereinheit (8) einen CAN-Bus (9) zur Anbindung an eine Recheneinheit (10) der Ambientebeleuchtung umfasst.

5. Kfz-Ladegerät (1) zum drahtlosen Laden eines Telefons (7) nach einem der Ansprüche 1 bis 4, **dadurch gekennzeichnet, dass** das Kfz-Ladegerät (1) ferner ein äußeres Gehäuse (4) umfasst, das zumindest teilweise die seitlichen Seiten des Halters (3) der Induktionsspule (11) abdeckt.

6. Kfz-Ladegerät (1) zum drahtlosen Laden eines Telefons (7) nach einem der Ansprüche 1 bis 5, **dadurch gekennzeichnet, dass** es ferner einen Magnetring (12) zur Sicherstellung der Position des Telefons (7) relativ zum Kfz-Ladegerät (1) umfasst.

7. Kfz-Ladegerät (1) zum drahtlosen Laden eines Telefons (7) nach einem der vorhergehenden Ansprüche, **dadurch gekennzeichnet, dass** die Steuereinheit (8) dazu konfiguriert ist, das Laden des Telefons (7) über die Induktionsspule (11) zu detektieren, und ferner dazu konfiguriert ist, den Ladezustand des Telefons (7) über die Lichtquelle (5) anzuzeigen, wenn ein Laden des Telefons (7) detektiert wird, und die Lichtquelle (5) zur Ambientebeleuchtung zu steuern, wenn kein Laden des Telefons (7) detektiert wird.

8. Kfz-Ladegerät (1) zum drahtlosen Laden eines Telefons (7) nach einem der vorhergehenden Ansprüche, **dadurch gekennzeichnet, dass** der Halter (3) im Bereich des lichtdurchlässigen Materials eine erste Lichtaustrittsfläche mit der Form eines Ringsegments und eine zweite Lichtaustrittsfläche mit der Form einer Zylinderfläche umfasst, wobei die erste Lichtaustrittsfläche und die zweite Lichtaustrittsfläche aneinander angrenzen und einen oberen äußeren Rand einer Ladefläche definieren.

9. Verfahren zum Steuern eines Kfz-Ladegeräts (1) zum drahtlosen Laden eines Telefons (7) nach einem der Ansprüche 1 bis 7, **dadurch gekennzeichnet, dass** mittels der Induktionsspule (11) das Vorhandensein des Telefons (7) im Wirkbereich der Induktionsspule (11) überwacht wird,
• wobei im Fall, dass sich das Telefon (7) im Wirkbereich der Induktionsspule (11) befindet, durch die Steuereinheit (8) ein Signal an die Lichtquelle (5) zum Leuchten von Lichtsignalen gesendet wird, die den Ladezustand des Telefons (7) durch die Induktionsspule (11) anzeigen, und
• und im Fall, dass sich das Telefon (7) außerhalb des Wirkbereichs der Induktionsspule (11) befindet, durch die Steuereinheit (8) ein Signal an die Lichtquelle (5) zur Ambientebeleuchtung gesendet wird.

10. Verfahren zum Steuern eines Kfz-Ladegeräts (1) zum drahtlosen Laden eines Telefons (7) nach Anspruch 9, **dadurch gekennzeichnet, dass** zu den Lichtsignalen, die den Ladezustand des Telefons (7) durch die Induktionsspule (11) anzeigen, ein Blinken der Lichtquelle (5) oder das Abstrahlen eines pulsierenden Lichts durch die Lichtquelle (5) gehört.

11. Verfahren zum Steuern eines Kfz-Ladegeräts (1) zum drahtlosen Laden eines Telefons (7) nach Anspruch 9 oder 10, **dadurch gekennzeichnet, dass** im Fall, dass sich das Telefon (7) außerhalb des Wirkbereichs der Induktionsspule (11) befindet, durch die Steuereinheit (8) ein Signal von der Recheneinheit (10) der Ambientebeleuchtung empfangen wird und durch die Steuereinheit (8) ein Signal an die Lichtquelle (5) für eine mit den übrigen Lichtquellen des Fahrzeuginnenraums übereinstimmende Ambientebeleuchtung gesendet wird.
